# EUROPÄISCHE PATENTSCHRIFT

(11) **EP 1 044 838 B1**
(45) Veröffentlichungstag und Bekanntmachung des Hinweises auf die Patenterteilung: **05.12.2001**
(21) Anmeldenummer: 00116535.6
(22) Anmeldetag: 16.06.1998
(51) Int. Cl.: E05B 51/02, B60J 7/185

(54) **Verschlussvorrichtung für Kraftfahrzeugverdecke**
Locking device for convertible top of motor vehicle
Système de verrouillage pour capote d'automobile

(43) Veröffentlichungstag der Anmeldung: 18.10.2000
(62) Teilanmeldung aus: 98110982.0
(73) Patentinhaber: Dura Convertible Systems GmbH, 50735 Köln (DE)
(72) Erfinder: MacFarland, David, Dipl.-Ing., 85716 Unterschleissheim (DE)
(74) Vertreter: Strobel, Wolfgang, Dipl.-Ing.

(56) Entgegenhaltungen:
- EP-A- 0 657 607
- US-A- 3 296 742

## Beschreibung

Die vorliegende Erfindung betrifft eine Verschlußvorrichtung für Kraftfahrzeugverdecke nach dem Oberbegriff des Anspruchs 1.

Kraftfahrzeugverdecke in Form von faltbaren Verdecken oder Hardtops sind in der Regel im Heckbereich des Fahrzeugs gelagert und an diesem verschwenkbar, wobei sie von einer geschlossenen Verdeckstellung in eine offene Stellung faltbar bzw. schwenkbar sind.

Verdecke weisen in der Regel einen vorderen querverlaufenden Frontspriegel oder eine entsprechende Verstärkungseinrichtung auf und werden an dem Windlauf der Windschutzscheibe des Fahrzeugs für die Verdeckstellung festgelegt.

Hierzu werden entsprechende Verbindungseinrichtungen zur Festlegung vorgesehen. Eine Verschlußvorrichtung des herkömmlichen Standes der Technik weist eine erste Verbindungseinrichtung auf, die, zur Festlegung des Verdecks am Fahrzeug, einen Schließmechanismus-aufweist, und weist.weiterhin wenigstens eine zweite Verbindungseinrichtung auf, die im Abstand zur ersten Verbindungseinrichtung angeordnet ist und ein zapfenförmiges Organ sowie ein zur Aufnahme des zapfenförmigen Organs geeignetes Führungsorgan aufweist.

Bei einer derartigen Verschlußvorrichtung gemäß dem Stand der Technik dient die zweite Verbindungseinrichtung lediglich zum Führen des zapfenförmigen Organs, und die erste Verbindungseinrichtung ermöglicht die Verbindung des Verdecks bzw. Hardtops mit dem Fahrzeug.

Nachteilig hierbei ist, daß aufgrund der Verbindung nur an einem Punkt eine wirksame und insbesondere dichte Verbindung des Verdecks mit dem Fahrzeug im Bereich der Oberkante der Frontscheibe nur unzureichend erfolgt, wobei insbesondere bei hohen Geschwindigkeiten aufgrund des entstehenden Luftdrucks sich das Verdeck wieder abheben kann und ein entsprechend großer Luftspalt entsteht, der Außenluft ungehindert eindringen läßt, was insbesondere bei schlechter Witterung wie Regen oder Schnee besonders nachteilig ist.

Diese Nachteile werden durch den Stand der Technik gemäß EP 657 607 überwunden. Aus dieser Druckschrift ist eine Verschlußvorrichtung für Kraftfahrzeugverdecke bekannt, die eine erste Verbindungseinrichtung aufweist, die zur Festlegung des Verdecks am Fahrzeug einen Schließmechanismus aufweist. Desweiteren weist die Verschlußvorrichtung zwei Verbindungseinrichtungen auf, die im wesentlichen im gleichen Abstand zur ersten Verbindungseinrichtung angeordnet sind und jeweils ein am Verdeck angebrachtes zapfenförmiges Organ mit einer horizontalen Durchtrittsöffnung und ein zur Aufnahme des zapfenförmigen Organs geeignetes Führungsorgan am Fahrzeug aufweisen. Zwei horizontale Verbindungsstangen, die über eine relativ komplizierte Mechanik mit der ersten Verbindungseinrichtung verbunden sind, dienen zum Eingriff in die horizontalen Durchtrittsöffnungen der zapfenförmigen Organe. Beim Festlegen des Schließmechanismusses der ersten Verbindungseinrichtung wird das Verdeck in Richtung des Fahrzeugs herangezogen, wobei die zapfenförmigen Organe in den Führungsorganen aufgenommen werden und gleichzeitig die Verbindungsstangen nach außen verschoben werden, um in Eingriff mit den Durchtrittsöffnungen zu gelangen und so eine Festlegung des Verdecks an insgesamt drei Punkten zu gewährleisten.

Allerdings können bei der Verschlußvorrichtung gemäß EP 657 607 aufgrund der komplizierten Mechanik leicht Fehler auftreten, die ein sauberes Verschließen des Verdecks verhindern. Vor allem das Einführen der Verbindungsstangen in die Durchtrittsöffnungen der zapfenförmigen Organe ist hierbei besonders anfällig, da das Verdeck äußerst genau am richtigen Ort plaziert sein muß, damit die Verbindungsstangen in die Öffnungen eindringen können. Weisen die Durchtrittsöffnungen hingegen einen größeren Durchmesser auf als die Verbindungsstangen, so geht der erwünschte Effekt einer genauen Festlegung des Verdecks verloren, und das Verdeck beginnt bei hohen Geschwindigkeiten zu wackeln.

Der vorliegenden Erfindung liegt deshalb die Aufgabe zugrunde, eine Verschlußvorrichtung für Kraftfahrzeugverdecke zu schaffen, die die Nachteile des Standes der Technik überwindet, eine extrem sichere Abdichtung des Verdecks insbesondere auch bei hohen Geschwindigkeiten des Fahrzeugs gewährleistet und zudem sehr leicht betätigbar ist.

Diese Aufgabe wird durch die Merkmale des Anspruchs 1 gelöst.

Durch die Merkmale des kennzeichnenden Teils des Anspruchs 1, wird erreicht, daß das Verdeck sicher an wenigstens zwei Punkten festgelegt wird, wobei die Verschlußvorrichtung besonders leicht zu betätigen ist, und eine besonders dichte Lagesicherung des Verdecks am Fahrzeug im Bereich der vorderen Kante des Verdecks ermöglicht wird.

Vorteilhafterweise sind zwei Verbindungseinrichtungen vorgesehen, zwischen denen, vorzugsweise mittig, die erste Verbindungseinrichtung vorgesehen ist, so daß dadurch eine äußerst stabile Dreipunktverbindung des Verdecks mit dem Fahrzeug ermöglicht wird.

Dabei weisen die beiden zweiten Verbindungseinrichtungen vorteilhafterweise im wesentlichen den gleichen Abstand zur ersten Verbindungseinrichtung auf.

Vorteilhafterweise ist das Führungsorgan hülsenförmig ausgebildet und weist einen inneren Ringraum auf, in dem eine zumindest teilweise flexible Ringvorrichtung angeordnet ist, die einen Abschnitt des zapfenförmigen Organs zumindest teilweise umgibt, wenn diese in dem Führungsorgan eingeführt ist, wobei im Inneren der Ringvorrichtung das flüssige oder gasförmige Medium angeordnet ist, das durch Druckbeaufschlagung mit Volumenvergrößerung des Ringraumes eine Arretierung des zapfenförmigen Organs an dem Abschnitt erzeugt. Vorteilhafterweise wird hiermit somit auf äußerst einfache Weise eine sichere Arretierung des zapfenförmigen Organs erreicht, wobei mit besonderem Vorteil durch Ablassen des Drucks auf einfachste Weise wieder ein schnelles Lösen ermöglicht wird und das Verdeck entsprechend einfach wieder in eine "Cabrio"-Stellung zurückgeführt werden kann.

Weiterhin ist vorteilhaft, daß ein mit einem Medium gefüllter Kanal zwischen der ersten Verbindungseinrichtung und der wenigstens einen zweiten Verbindungseinrichtung vorgesehen ist, und durch Druckbeaufschlagung bzw. Lösen mittels der ersten Verbindungseinrichtung die Steuerung der Arretierung bzw. des Lösens des zapfenförmigen Organs erfolgt.

In einer bevorzugten Ausgestaltung ist der Kanal im Windlauf des Fahrzeugs angeordnet. Selbstverständlich ist es auch möglich, den Kanal bei entsprechender Anpassung der übrigen Organe im vorderen Randbereich des Verdecks anzuordnen.

Vorteilhafterweise erfolgt die Druckbeaufschlagung mittels eines Drückorgans, das von der ersten Verbindungseinrichtung betätigbar ist. Dadurch wird auf sehr wirkungsvolle Weise mit einfachen Mitteln die Druckbeaufschlagung durchgeführt bzw. bei Entfernen der Druckbeaufschlagung das Lösen ermöglicht.

Hierzu weist vorteilhafterweise das Drückorgan einen Zapfen auf, der gegen den Kanal drückbar ist und mittels eines Hebelmechanismus der ersten Verbindungseinrichtung betätigbar ist.

Vorteilhafterweise ist die erste Verbindungseinrichtung am vorderen Querspriegel des Fahrzeugsverdecks angeordnet.

Weiterhin ist vorteilhafterweise die erste Verbindungseinrichtung ein Hebelmechanismus, der einen Befestigungshebel, einen damit verbundene Verriegelungshebel und einen Bewegungshebel des Drückorgans aufweist.

Weitere Einzelheiten, Merkmale und Vorteile der Erfindung ergeben sich aus der nachfolgenden Beschreibung unter Bezugnahme auf die Zeichnungen. Darin zeigt:
- Fig. 1: eine schematische Darstellung von zwei zweiten Verbindungseinrichtungen der erfindungsgemäßen Verschlußvorrichtung in einer ersten Ausführungsform in geöffneter Stellung der Verschlußvorrichtung;
- Fig. 2: eine analoge Ansicht zu Fig. 1, mit geschlossener Verschlußvorrichtung, jedoch noch nicht arretierter zweiter Verbindungseinrichtungen;
- Fig. 3: eine analoge Ansicht zu Fig. 2, jedoch mit arretierten zweiten Verbindungseinrichtungen;
- Fig. 4: eine schematische, teilweise geschnittene Ansicht einer Ausführungsform der ersten Verbindungseinrichtung mit erfindungsgemäßen Verschlußvorrichtungen in geöffneter Stellung;
- Fig. 5: eine analoge Ansicht zu Fig. 4 in einer Zwischenstellung zwischen geöffneter und geschlossener Stellung der ersten Verbindungseinrichtung; und
- Fig. 6: eine analoge Ansicht zu Fig. 5, jedoch mit geschlossener erster Verbindungseinrichtung;

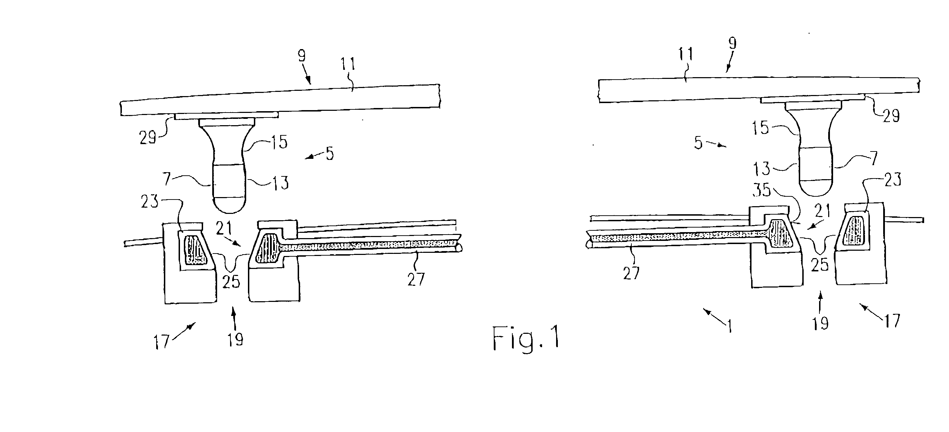

Nachfolgend wird unter Bezugnahme auf die Fig. 1 bis 6 eine bevorzugte Ausführungsform der erfindungsgemäßen Verschlußvorrichtung beschrieben.

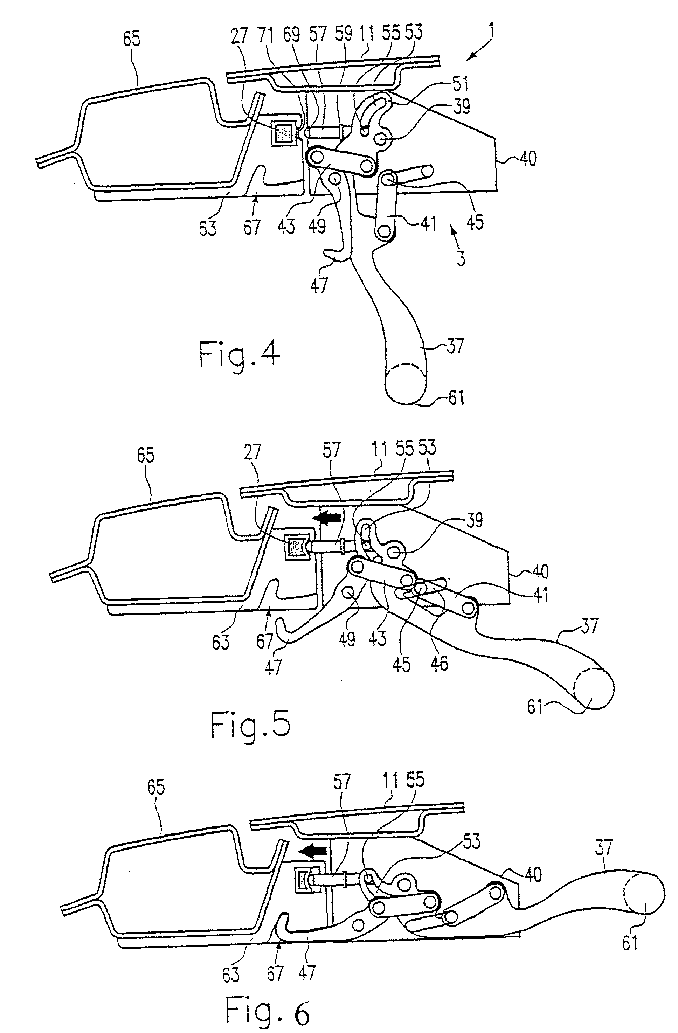

Die erfindungsgemäße Verschlußvorrichtung ist allgemein mit der Bezugsziffer 1 bezeichnet. Sie weist eine erste Verbindungseinrichtung 3 auf, die näher unter Bezugnahme auf die Fig. 4 bis 6 beschrieben werden wird.

In Fig. 1 ist mit Bezugsziffer 5 eine zweite Verbindungseinrichtung bezeichnet, wobei die dargestellte Verschiußvorrichtung 1 im dargestellten Ausführungsbeispiel zwei zweite Verbindungseinrichtungen 5 aufweist.

Wie aus Fig. 1 ersichtlich, weist jede zweite Verbindungseinrichtung 5 ein zapfenförmiges Organ 7 auf, das an einem entsprechenden Element des Kraftfahrzeugverdecks 9 angebracht ist. Dieses entsprechende Element kann beispielsweise der vordere Querspriegel 11 des Kraftfahrzeugverdecks 9 sein. im Beispielsfall gemäß Fig. 1 ist der Querspriegel 11 nur abschnittsweise dargestellt.

Das zapfenförmige Organ 7 weist im dargestellten Beispielsfalle gemäß Fig. 1 eine zylindrische Führungsfläche 13 und eine Einschnürung 15 auf, die zumindest teilweise einen geringeren Querschnitt als die Führungsfläche 13 aufweist.

Dem zapfenförmigen Organ 7 entsprechend zugeordnet weist die zweite Verbindungseinrichtung 5 ein Führungsorgan 17 auf, das im wesentlichen ringförmig ausgebildet ist und eine innere Ausnehmung 19 aufweist, die zur Aufnahme des zapfenförmigen Organs 7 dient.

Das Führungsorgan 17 weist weiterhin eine Verriegelungseinrichtung 21 zur zeitweisen Verriegelung des zapfenförmigen Organs 7 in dem Führungsorgan 17 auf. Wie aus Fig. 1 ersichtlich, ist die Verriegelungseinrichtung 21 als im wesentlichen ringförmiger Körper ausgebildet, der in einer entsprechenden Innenausnehmung 23 angeordnet ist.

Im dargestellten Beispielsfalle ist die ringförmige Verriegelungseinrichtung als elastisch verformbarer Hohlring 25 ausgebildet, in den ein Kanal 27 mündet. Sowohl der Hohlring 25 als auch der Kanal 27 sind mit einem Medium gefüllt, das beispielsweise gasförmig oder flüssig sein kann.

In dem in Fig. 1 dargestellten Beispielsfalle weist der Hohlring 25 eine sich von unten nach oben verjüngende Querschnittsfläche auf, so daß sich im unbeaufschlagten Zustand insgesamt ein sich nach oben öffnender kegelstumpfartiger Innenumfang ergibt, der zur besseren Einführung des zapfenförmigen Organs 7 dient.

Selbstverständlich können auch andere Umfangsformen, wie zylindrische, gebogene Formen etc. verwendet werden.

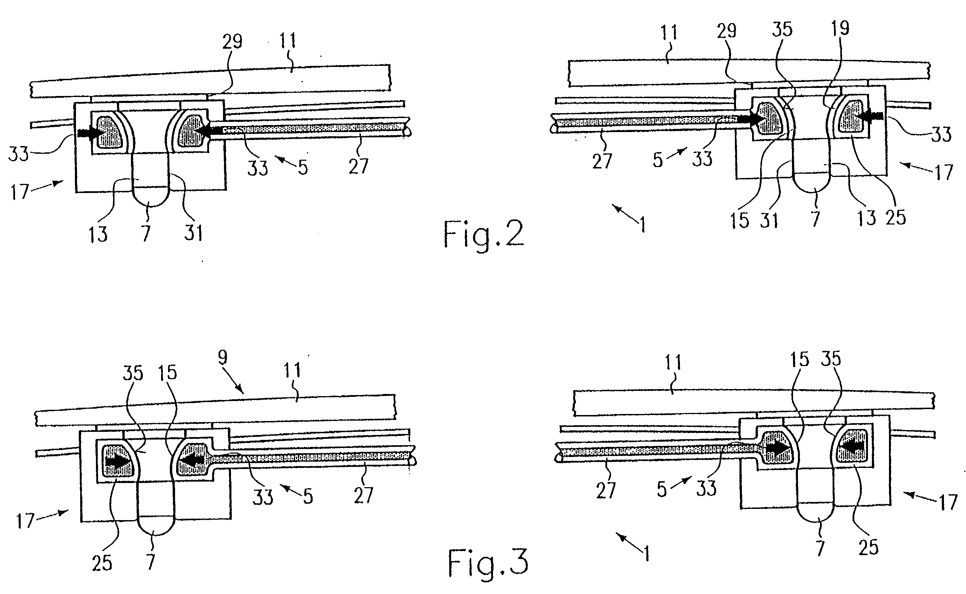

In Fig. 2 ist die zweite Verbindungseinrichtung 5 in einer Stellung zwischen der geöffneten Stellung von Fig. 1 und einer Arretierstellung des zapfenförmigen Organs 7 dargestellt.

Wie ersichtlich, ist das zapfenförmige Organ 7 in das Führungsorgan 17 vollständig eingeführt, so daß der Querspriegel 11, beabstandet durch eine Halteplatte 29, an dem Führungsorgan 17 anliegt. Die Führungsfläche 13 befindet sich in einem entsprechend passgenauen Abschnitt 31 der inneren Ausnehmung 19, und die Einschnürung 15 liegt noch frei in der Innenausnehmung 19.

Wie mit den Pfeilen 33 angedeutet, wird über den Kanal 27 mittels Druckbeaufschlagung eine Volumenerhöhung im Ringraum.im Hohlring 25 erzeugt, wodurch sich die Innenumfangsfläche 35 des Hohlrings 25 ausbeult.

Durch weitere Erhöhung des Druckes bzw. Volumenzufuhr in den Hohlring 25 hinein wird schließlich, wie in Fig. 3 dargestellt, eine teilweise oder sogar vollständige Anlage der Innenumfangsfläche 35 des Hohlrings 25 an der Einschnürung 15 des zapfenförmigen Organs erzeugt, so daß damit das zapfenförmige Organ 7 in dem Führungsorgan 17 arretiert ist.

Nachfolgend wird nunmehr unter Bezugnahme auf die Fig. 4 bis 6 eine erste bevorzugte Ausführungsform der ersten Verbindungseinrichtung beschrieben. Die erste Verbindungseinrichtung 3 ist, wie aus Fig. 4 ersichtlich, am oberen Querspriegel 11 angeordnet. Sie weist einen gelenkig gelagerten Betätigungshebel 37 auf. Der Betätigungshebel 37 ist an einem Gelenkpunkt 39 und um diesen herum schwenkbar gelagert. An dem Betätigungshebel 37 sind weiterhin zwei Gelenkelemente 41 und 43 gelenkig gelagert, wobei eines der Gelenkelemente 41 in einer längsbeweglichen Gelenkanordnung 45 an einer Aufnahme 40 angelenkt ist. Das andere Gelenkelement 42 ist mit einem Verriegelungshaken 47 verbunden, der seinerseits in einem Gelenkpunkt 49 gelenkig an der Aufnahme 40 befestigt ist. Die Aufnahme 40 ist ihrerseits am Querspriegel 11 befestigt.

Der Betätigungshebel 37 weist weiterhin einen nasenartigen Vorsprung 51 auf, in dem eine bogenförmige Längsöffnung 53 ausgebildet ist. In der bogenförmigen Längsöffnung 53 ist ein Gelenk 55 beweglich angeordnet, das seinerseits als Anlenkung für ein Drückorgan 57 dient. Das Drückorgan 57 ist, wie im Beispielsfalle von Fig. 4 dargestellt, als fingerförmiger Zapfen ausgebildet. Der fingerförmige Zapfen 57 ist längsbeweglich in einem Lager 59 gelagert, das seinerseits an der Aufnahme 40 der ersten Verbindungseinrichtung 3 festgelegt ist.

Der Betätigungshebel 37 kann an seinem anderen, dem nasenartigen Vorsprung 51 gegenüberliegenden Ende einen Querbügel 61 aufweisen, der einen bzw. vorzugsweise zwei im wesentlichen parallel zur Richtung des Querspriegels vorspringende Vorsprünge aufweist, die die manuelle Erfassung des Betätigungshebels 37 und damit die Betätigung der ersten Verbindungseinrichtung 3 erleichtern.

Die Verbindungseinrichtung 3 weist weiterhin eine Gegenaufnahme 63 auf, die am sogenannten Windlauf 65 des Kraftfahrzeugs angeordnet ist. Der Windlauf 65 ist seinerseits im oberen Randbereich der Frontscheibe (nicht dargestellt) des Kraftfahrzeugs angeordnet.

In der Gegenaufnahme 63 ist eine Hakenaufnahme 67 ausgebildet, die in ihrer Form komplementär zum Verriegelungshaken 47 ist.

Weiterhin verläuft in dieser Gegenaufnahme 63 der Kanal 27 von einer der zweiten Verbindungseinrichtungen 5 zur anderen. Gegenüberliegend dem vorderen Ende 69 des Drückorgans ist eine Aussparung 71 in der Gegenaufnahme 63 ausgebildet, so daß ein Eingriff des Drückorgans 57 auf den Kanal 27 möglich ist.

Nachfolgend wird nunmehr die Funktionsweise der ersten Verbindungseinrichtung 3 mit dem entsprechenden Schließmechanismus beschrieben. Ausgehend von der Stellung gemäß Fig. 4 wird der Betätigungshebel 37, wie in Fig. 5 dargestellt, nach hinten, also in Richtung Fahrzeugheck um den Gelenkpunkt 39 verschwenkt. Dabei nimmt das Gelenkelement 43 das eine Ende des Verriegelungshakens 47 mit, so daß der Verriegelungshaken 47 um den Gelenkpunkt 49 in Richtung der Hakenaufnahme 67 schwenkt. Das Gelenkelement 41 nimmt seine in einem Längsschlitz 46 bewegliche Gelenkanordnung 45 mit.

Durch die bogenförmige Längsöffnung 53 wird über das Gelenk 55 das Drückorgan bzw. der Drückzapfen 57 gegen den Kanal 27 gedrückt, wodurch eine Volumenverringerung in diesem Bereich stattfindet, welche zu einer Volumenvergrößerung im Hohlring 25 gemäß Fig. 2 führt.

Wenn der Betätigungshebel 37, wie in Fig. 6 dargestellt, in seine Verriegelungsposition verschwenkt ist, befindet sich der Verriegelungshaken 47 in seiner eingerasteten Verriegelungsstellung in der Hakenaufnahme 67 und das Drückorgan 57 wurde in seine vorderste Stellung verschoben: Das Gelenk 55 befindet sich am anderen Ende der bogenförmigen Längsöffnung 53.

Aufgrund der vorzugsweise großen Hebelwirkung durch den Betätigungshebel 57 kann eine wirksame und eine nicht allzu große Kraft erfordernde Druckbewegung auf den Kanal 27 erfolgen, wobei er gleichzeitig in verriegelnde Stellung gebracht wird. In der Verriegelungsstellung gemäß Fig. 6 sind dann auch die zapfenförmigen Organe 7 der zweiten Verbindungseinrichtung 5, wie in Fig. 3 gezeigt, verriegelt.

Mit der vorliegenden Erfindung wird somit eine einfach aufgebaute Verschlußvorrichtung für Kraftfahrzeugverdecke geschaffen, die eine Mehrpunktverbindung, insbesondere eine Dreipunktverbindung des Verdecks mit dem Fahrzeug schafft, wobei eine besonders stabile Verbindung des Verdecks mit dem Fahrzeug, insbesondere im Bereich des bei hoher Geschwindigkeit stark auftreffenden Luftstromes erreicht wird, so daß eine äußerst kostengünstige stabile Verschlußvorrichtung geschaffen wird.

## Patentansprüche

1. Verschlußvorrichtung für Kraftfahrzeugverdecke,
mit einer ersten Verbindungseinrichtung (3), die, zur Festlegung eines Verdecks (9) am Fahrzeug, einen Schließmechanismus aufweist,
mit wenigstens einer zweiten Verbindungseinrichtung (5), die im Abstand zur ersten Verbindungseinrichtung (3) angeordnet ist und ein zapfenförmiges Organ (7), das am Verdeck (9) angebracht ist, sowie ein zur Aufnahme des zapfenförmigen Organs geeignetes Führungsorgan (17) aufweist,
wobei die zweite Verbindungseinrichtung (5) eine Verriegelungseinrichtung (21) zur zeitweisen Verriegelung des zapfenförmigen Organs (7) in dem Führungsorgan (17) aufweist und mit dem Schließmechanismus derart verbunden ist, daß bei Festlegen des Schließmechanismus in seine Schließstellung gleichzeitig die Verriegelung des zapfenförmigen Organs (7) erfolgt,
**dadurch gekennzeichnet, daß**
die Verriegelungseinrichtung (21) eine zumindest teilweise flexible Ringvorrichtung (25) aufweist, die einen Abschnitt (15) des zapfenförmigen Organs (7) zumindest teilweise umgibt, wenn dieses in das Führungsorgan (17) eingeführt ist, und im Inneren der Ringvorrichtung (25) ein flüssiges oder gasförmiges Medium angeordnet ist, das durch Druckbeaufschlagung mit Volumenänderung der Ringvorrichtung (25) eine Arretierung des zapfenförmigen Organs (7) an dem Abschnitt (15) erzeugt.

2. Verschlußvorrichtung nach Anspruch 1, **dadurch gekennzeichnet, daß** zwei zweite Verbindungseinrichtungen (5) vorgesehen sind.

3. Verschiußvorrichtung nach Anspruch 2, **dadurch gekennzeichnet, daß** die beiden zweiten Verbindungseinrichtungen (5) im wesentlichen im gleichen Abstand zur ersten Verbindungseinrichtung (3) angeordnet sind.

4. Verschlußvorrichtung nach einem der Ansprüche 1 bis 3, **dadurch gekennzeichnet, daß** das Führungsorgan (17) hülsenförmig ausgebildet ist und einen inneren Ringraum aufweist, in dem die Ringvorrichtung (25) angeordnet ist.

5. Verschlußvorrichtung nach einem der Ansprüche 1 bis 4, **dadurch gekennzeichnet, daß** ein mit einem Medium gefüllter Kanal (27) zwischen der ersten Verbindungseinrichtung (3) und der wenigstens einen zweiten Verbindungseinrichtung (5) vorgesehen ist, und durch Druckbeaufschlagung bzw. Lösung mittels der ersten Verbindungseinrichtung (3) die Steuerung der Arretierung des zapfenförmigen Organs (7) erfolgt.

6. Verschlußvorrichtung nach Anspruch 5, **dadurch gekennzeichnet, daß** der Kanal (27) im Windlauf (65) des Fahrzeugs angeordnet ist.

7. Verschlußvorrichtung nach Anspruch 5 oder 6, **dadurch gekennzeichnet, daß** die Druckbeaufschlagung mittels eines Drückorgans (57) erfolgt, das von der ersten Verbindungseinrichtung (3) betätigbar ist.

8. Verschlußvorrichtung nach Anspruch 7, **dadurch gekennzeichnet, daß** das Drückorgan (57) ein Zapfen ist, der gegen den Kanal (27) drückbar ist und mittels eines Hebelmechanismus (37; 51, 53, 55) der ersten Verbindungseinrichtung (3) betätigbar ist.

9. Verschlußvorrichtung nach einem der Ansprüche 1 bis 8, **dadurch gekennzeichnet, daß** die erste Verbindungseinrichtung am vorderen Querspriegel (11) des Fahrzeugverdecks (9) angeordnet ist.

10. Verschlußvorrichtung nach einem der Ansprüche *1* bis 9, **dadurch gekennzeichnet, daß** die erste Verbindungseinrichtung (3) einen Hebelmechanismus mit einem Betätigungshebel (37), einen damit verbundenen Verriegelungshaken (47) und einen Bewegungshebel (51, 53) des Drückorgans aufweist.

## Claims

1. Fastening arrangement for motor-vehicle canopy tops, having a first connecting device (3) which has a latching mechanism for securing a canopy top (9) to the vehicle, having at least one second connecting device (5) which is arranged at a distant from the first connecting device (3) and has a stud-shaped element (7) which is attached to the canopy top (9), and a guide element (17) which is suitable for receiving the stud-shaped element, the second connecting device (5) having a locking device (21) for temporarily locking the stud-shaped element (7) in the guide element (17) and being connected to the latching mechanism in such a manner that when the latching mechanism is secured in its latching position the stud-shaped element (7) is locked at the same time, **characterized in that** the locking device (21) has an at least partially flexible annular arrangement (25) which at least partially surrounds a section (15) of the stud-shaped element (7) when the latter is inserted into the guide element (17), and a liquid or gaseous medium is arranged in the interior of the annular arrangement (25), which medium, by pressurization together with a change in volume of the annular arrangement (25), causes the stud-shaped element (7) to be retained on the section (15).

2. Fastening arrangement according to Claim 1, **characterized in that** two second connecting devices (5) are provided.

3. Fastening arrangement according to Claim 2, **characterized in that** the two second connecting devices (5) are arranged essentially at the same distance from the first connecting device (3).

4. Fastening arrangement according to one of Claims 1 to 3, **characterized in that** the guide element (17) is of sleeve-shaped design and has an inner annular space in which the annular arrangement (25) is arranged.

5. Fastening arrangement according to one of Claims 1 to 4, **characterized in that** a channel (27) which is filled with a medium is provided between the first connecting device (3) and the at least one second connecting device (5), and by pressurization or release by means of the first connecting device (3) the retention of the stud-shaped element (7) is controlled.

6. Fastening arrangement according to Claim 5, **characterized in that** the channel (27) is arranged in the cowl (65) of the vehicle.

7. Fastening arrangement according to Claim 5 or 6, **characterized in that** the pressurization takes place by means of a pressing element (57) which can be actuated by the first connecting device (3).

8. Fastening arrangement according to Claim 7, **characterized in that** the pressing element (57) is a stud which can be pressed against the channel (27) and can be actuated by means of a lever mechanism (37; 51, 53, 55) of the first connecting device (3).

9. Fastening arrangement according to one of Claims 1 to 8, **characterized in that** the first connecting device is arranged on the front transverse bow (11) of the vehicle canopy top (9).

10. Fastening arrangement according to one of Claims 1 to 9, **characterized in that** the first connecting device (3) has a lever mechanism with an actuating lever (37), a locking hook (47) which is connected thereto and a moving lever (51, 53) of the pressing element.

## Revendications

1. Dispositif de fermeture pour des capotes de véhicules automobiles, avec un premier dispositif d'assemblage (3), qui présente un mécanisme de fermeture pour la fixation d'une capote (9) sur le véhicule, avec au moins un deuxième dispositif d'assemblage (5), disposé à distance du premier dispositif d'assemblage (3) et pourvu d'un organe (7) en forme de goujon, monté sur la capote (9), ainsi que d'un organe de guidage (17) adapté à recevoir l'organe en forme de goujon, le deuxième dispositif d'assemblage (5) présentant un dispositif de verrouillage (21) pour le verrouillage temporaire de l'organe (7) en forme de goujon dans l'organe de guidage (17) et étant assemblé avec le mécanisme de fermeture de sorte que le verrouillage de l'organe (7) en forme de goujon est simultanément assuré lors de la fixation du mécanisme de fermeture dans sa position de fermeture, **caractérisé en ce que** le dispositif de verrouillage (21) présente un dispositif annulaire (25) au moins en partie flexible, qui entoure au moins en partie une section (15) de l'organe (7) en forme de goujon, lorsque ce dernier est introduit dans l'organe de guidage (17), et **en ce qu'**un fluide liquide ou gazeux est disposé à l'intérieur du dispositif annulaire (25), ce fluide provoquant un blocage de l'organe (7) en forme de goujon sur la section (15) par sollicitation en pression avec variation de volume du dispositif annulaire (25).

2. Dispositif de fermeture suivant la revendication 1, **caractérisé en ce que** sont prévus deux deuxièmes dispositifs d'assemblage (5).

3. Dispositif de fermeture suivant la revendication 2, **caractérisé en ce que** les deux deuxièmes dispositifs d'assemblage (5) sont essentiellement disposés à distance égale par rapport au premier dispositif d'assemblage (3).

4. Dispositif de fermeture suivant l'une des revendications 1 à 3, **caractérisé en ce que** l'organe de guidage (17) est réalisé en forme de manchon et présente un espace annulaire interne, dans lequel est disposé le dispositif annulaire (25).

5. Dispositif de fermeture suivant l'une des revendications 1 à 4, **caractérisé en ce qu'**un canal (27) rempli d'un fluide est prévu entre le premier dispositif d'assemblage (3) et le deuxième dispositif d'assemblage (5), au moins, et **en ce que** la commande du blocage et/ou du déblocage de l'organe (7) en forme de goujon est assurée par sollicitation en pression et/ou par déblocage au moyen du premier dispositif d'assemblage (3).

6. Dispositif de fermeture suivant la revendication 5, **caractérisé en ce que** le canal (27) est disposé dans l'auvent (65) du véhicule.

7. Dispositif de fermeture suivant l'une des revendications 5 et 6, **caractérisé en ce que** la sollicitation en pression est assurée au moyen d'un organe de poussée (57), manoeuvrable par le premier dispositif d'assemblage (3).

8. Dispositif de fermeture suivant la revendication 7, **caractérisé en ce que** l'organe de poussée (57) est un tourillon, qui peut être pressé contre le canal (27) et est manoeuvrable au moyen d'un mécanisme à leviers (37 ; 51, 53, 55) du premier dispositif d'assemblage (3).

9. Dispositif de fermeture suivant l'une des revendications 1 à 8, **caractérisé en ce que** le premier dispositif d'assemblage est disposé sur l'arceau transversal avant (11) de la capote (9) du véhicule.

10. Dispositif de fermeture suivant l'une des revendications 1 à 9, **caractérisé en ce que** le premier dispositif d'assemblage (3) présente un mécanisme à leviers avec un levier de manoeuvre (37), un crochet de verrouillage (47) assemblé avec ce dernier, et un levier de déplacement (51, 53) de l'organe de poussée.
